# EUROPÄISCHE PATENTANMELDUNG

(11) **EP 0 913 671 A1**
(43) Veröffentlichungstag der Anmeldung: **06.05.1999**
(21) Anmeldenummer: 98119707.2
(22) Anmeldetag: 19.10.1998
(51) Int. Cl.: G01F 23/26, G01N 35/10

(54) **Verfahren und Vorrichtung zum Flüssigkeitstransfer mit einem Analysegerät**

(30) Priorität: 29.10.1997 DE 19747667; 19.12.1997 DE 19756842
(71) Anmelder: Roche Diagnostics GmbH, 68298 Mannheim (DE)
(72) Erfinder: Roesicke, Bernd, 68305 Mannheim (DE)
(74) Vertreter: Jany, Peter

(57) **Zusammenfassung**

Die Erfindung betrifft eine Flüssigkeitstransfereinrichtung für ein Analysegerät mit einer Flüssigkeitstransfernadel (5) und einem kapazitiven Flüssigkeitshöhenstandsdetektor zur Detektion des Eintauchens der Flüssigkeitstransfernadel (5) in eine in einem Gefäß befindliche Analyseflüssigkeit (4). Zur sicheren Unterscheidung, ob die Flüssigkeitstransfernadel (5) in die Analyseflüssigkeit (4) eingetaucht ist oder sich beispielsweise in einem Schaum befindet, wird vorgeschlagen, zusätzlich eine Messung mit einem temperaturabhängigen Detektionswiderstand (50) durchzuführen.

## Beschreibung

Die Erfindung betrifft eine Flüssigkeitstransfereinrichtung für ein Analysegerät mit einer Flüssigkeitstransfernadel und einem kapazitiven Flüssigkeitshöhenstandsdetektor zur Detektion des Eintauchens der Flüssigkeitstransfernadel in eine in einem Gefäß befindliche Analyseflüssigkeit, wobei der Flüssigkeitshöhenstandsdetektor eine Signalelektrode, eine Gegenelektrode und eine Detektionsschaltung zur Detektion einer Änderung der Kapazität zwischen der Signalelektrode und der Gegenelektrode aufweist, sowie ein entsprechendes Verfahren zur Detektion des Eintauchens der Flüssigkeitstransfernadel.

In Analysegeräten, wie sie für die Analyse von Körperflüssigkeiten, insbesondere von Blut, erforderlich sind, werden Flüssigkeitstransfereinrichtungen benötigt, um Analyseflüssigkeiten, insbesondere flüssige Proben oder Reagenzien, zu transferieren. Gebräuchliche Flüssigkeitstransfereinrichtungen sind beispielsweise Pipettoren, die dazu verwendet werden, Proben oder Reagenzien aus einem ersten Gefäß anzusaugen und in ein zweites Gefäß auszustoßen, sowie Dispensoren, bei denen die Flüssigkeitstransfernadel über einen Schlauch an einen größeren Vorrat einer Flüssigkeit angeschlossen ist, die mit Hilfe einer Pumpeinrichtung durch die Nadeln ausgestoßen werden kann. Dispensoren erfüllen meist zugleich auch die Pipettorfunktion.

Allgemein ist als Flüssigkeitstransfereinrichtung im Sinne der vorliegenden Erfindung jede Vorrichtung anzusehen, die dazu dient, in einem Analysegerät in eine Analyseflüssigkeit einzutauchen, um irgendwelche Flüssigkeitstransferschritte (Ansaugen und/oder Ausstoßen von Flüssigkeit) mittels der Flüssigkeitstransfernadel zu ermöglichen. Die Flüssigkeitstransfernadel ist eine Hohlnadel, welche üblicherweise aus einem dünnen Rohr aus Metall oder Kunststoff besteht. Sie wird nachfolgend einfachheitshalber auch als "Nadel" bezeichnet.

Wenn die Nadel tief in die Analyseflüssigkeit eintaucht, bleibt ein relativ großer Flüssigkeitsüberschuß an ihrer Außenseite hängen. Hierdurch kann nicht nur die Genauigkeit der Dosierung verschlechtert werden, sondern besonders problematisch ist, daß der Flüssigkeitsüberschuß beim nächsten Eintauchen der Nadel die darin befindliche Flüssigkeit kontaminiert (sogenannte "Verschleppung").

Um die Eintauchtiefe besser zu kontrollieren, werden Flüssigkeitstransfereinrichtungen mit einer Sensoreinrichtung zur Detektion des Eintauchens der Nadel in die Analyseflüssigkeit versehen, die üblicherweise als Flüssigkeitshöhenstandsdetektor oder LLD (liquid level detector) bezeichnet wird. Der Flüssigkeitshöhenstandsdetektor ist mit dem Vertikalantrieb, durch den die Nadel in die Analyseflüssigkeit eingetaucht wird, verbunden, um die Eintauchbewegung zu stoppen, wenn die Spitze der Nadel um wenige Millimeter in die Analyseflüssigkeit eingetaucht ist. Es ist nämlich nicht nur das Problem der Verschleppung zu beachten, sondern gleichzeitig muß auch gewährleistet sein, daß keine Luft angesaugt wird, was zu diagnostisch relevanten Meßfehlern führen könnte. Aus diesem Grund ist eine Mindesteintauchtiefe einzuhalten, die ca. zwischen 0,1 mm und 2 mm betragen kann.

Die Vertikalposition der Nadel ist dabei zugleich ein Maß für den Höhenstand der Flüssigkeit in dem jeweiligen Gefäß. Infolgedessen ermöglicht der Flüssigkeitshöhenstandsdetektor zugleich die Kontrolle der in dem jeweiligen Gefäß vorhandenen Flüssigkeitsmenge, um beispielsweise ein Signal zu geben, wenn der Vorrat einer Reagenzflüssigkeit verbraucht ist und die Reagenzflasche deshalb ausgewechselt werden muß.

Ein gebräuchliches Konstruktionsprinzip für Flüssigkeitshöhenstandsdetektoren basiert darauf, den elektrischen Widerstand zwischen der Nadel und einer an der Spitze der Nadel angebrachten Elektrode zu messen. Nadel und Elektrode sind gegeneinander elektrisch isoliert, so daß der elektrische Widerstand zwischen ihnen im trockenen Zustand sehr hoch ist. Beim Eintauchen der Nadel und der Elektrode bildet die Probenflüssigkeit eine leitende Verbindung, so daß sich der elektrische Widerstand sprunghaft ändert. Dieses Signal läßt sich mit einfachen elektronischen Mitteln zuverlässig nachweisen. Ein wesentlicher Nachteil dieses Prinzips ist jedoch darin zu sehen, daß außer der Nadel eine Elektrode in die Flüssigkeit eintauchen muß, an der unvermeidlich ein Flüssigkeitsüberschuß hängen bleibt. Damit werden die zuvor erwähnten Probleme hinsichtlich Verschleppung und reduzierter Genauigkeit zusätzlich vergrößert.

In dieser Beziehung überlegen sind kapazitive Flüssigkeitshöhenstandsdetektoren, bei denen als Signal zur Detektion des Eintauchens der Nadel in die Flüssigkeit die Änderung der elektrischen Kapazität zwischen zwei Sensorelektroden mittels einer elektronischen Detektionsschaltung, welche eine Wechselspannungsquelle einschließt, erfaßt wird. Die erste Elektrode ist dabei üblicherweise die Nadel selbst (welche aus Metall oder einem elektrisch leitenden (metallisierten) Kunststoff besteht) und mit der der heiße Pol der Wechselspannungsquelle verbunden ist (Signalelektrode). Die Gegenelektrode, welche üblicherweise auf Erdpotential liegt, ist bei den bekannten Vorrichtungen auf der Außenseite des Flüssigkeitsgefäßes (unter dessen Boden und teilweise um die Seitenwände des Gefäßes herum) angeordnet. Sie ist üblicherweise ein Bestandteil der Gefäßhalterung. Beim Eintauchen der Nadelspitze in die Flüssigkeit ändert sich die Kapazität zwischen der Signalelektrode und der Gegenelektrode aufgrund der elektrischen Leitfähigkeit und der dielektrischen Eigenschaften der Flüssigkeit.

Derartige Flüssigkeitshöhenstandsdetektoren sind in der EP-A-0 164 679, dem US-Patent 4 818 492 und der EP-A-0 355 791 beschrieben. Diese Druckschriften enthalten nähere Erläuterungen, auf welche hier Bezug genommen wird.

Ein grundsätzliches Problem kapazitiver Flüssigkeitshöhenstandsdetektoren besteht darin, daß die Kapazitätsänderung beim Eintauchen in die Flüssigkeit sehr klein ist im Vergleich zu den sonstigen zwangsläufig vorhandenen Kapazitäten ("Störkapazitäten", z.B. des Anschlußkabels und des Verstärkereingangs). Infolgedessen ist das Verhältnis zwischen Nutzsignal und Störsignalen sehr ungünstig. Besonders problematisch ist dabei, daß ein Teil der Störkapazitäten nicht konstant ist, sondern sich zeitlich verhältnismäßig schnell ändert. Dies gilt insbesondere für kapazitive Störungen, die durch die Bewegung von Objekten (Bestandteile des Analyseautomaten, Hände oder andere Körperteile des Bedienungspersonals) verursacht werden. Insbesondere auf einem vollautomatischen Analysegerät, welches zahlreiche bewegliche Teile hat, sind solche Störungen in der Praxis nicht zu vermeiden.

In der EP-A-0 355 791 wird ein spezielles derartiges Problem (Störungen durch eine das Gefäß verschließende Membran) dadurch behoben, daß ein Referenzsignal bei der Kontaktierung der Membran fixiert und bei der weiteren Abwärtsbewegung der Nadel die Differenz zu diesem fixierten Referenzsignal detektiert wird. Dieses Verfahren ist auf den speziellen Anwendungszweck ausgerichtet. Störkapazitäten, die sich zwischen der Fixierung des Referenzsignals und der Detektion der Flüssigkeitsoberfläche ändern, führen zu einer Fehldetektion.

Bei dem in dem US-Patent 4 818 492 beschriebenen Flüssigkeitshöhenstandsdetektor wird die Störkapazität der Zuleitungen passiv mit Hilfe einer Brückenschaltung kompensiert. Andere kapazitive Störungen werden hierdurch jedoch nicht eliminiert und können auch bei dieser Konstruktion Fehldetektionen verursachen.

Eine Flüssigkeitstransfereinrichtung für ein Analysegerät mit einem Flüssigkeitshöhenstandsdetektor mit verbesserter Störungssicherheit und zuverlässigerer Funktion ist aus dem Dokument EP 0555710 A2 bekannt. Darin wurde eine die Flüssigkeitstransfernadel einschließende Koaxialelektrodenanordnung vorgeschlagen, die eine aktive Abschirmung mittels einer Kompensationselektrode, die an eine Spannungsfolgerschaltung angeschlossen ist, aufweist. Ferner wurde in einer vorteilhaften Weiterbildung vorgeschlagen, eine zusätzliche Abschirmelektrode, die als Gegenelektrode wirkt und auf Konstantpotential liegt, vorzusehen.

Bei einer solchen koaxialen, insbesondere triaxialen Anordnung mit aktiver Schirmung und mitgeführter Bezugselektrode ist es möglich, unabhängig von den konstruktiven Gegebenheiten der Geräteumgebung, den Füllmengen und den Dielektrika der Flüssigkeiten an sämtlichen, durch die Nadel erreichbaren Stellen im Gerät ohne spezifische Anpassung oder Einstellung den Flüssigkeitsstand zu detektieren. Der Grund hierfür besteht im wesentlichen darin, daß der Signalpfad von der Nadelspitze kapazitiv zur Flüssigkeitsoberfläche, von dort entlang eines gedachten Leitwertes entlang der Flüssigkeitsoberfläche und anschließend über einen kapazitiven Signalpfad zurück zur mitgeführten Bezugselektrode führt und somit die darunterliegende Flüssigkeitssäule von vernachlässigbarem Einfluß ist. Der Flüssigkeitshöhenstandsdetektor reagiert somit sehr empfindlich auf Kapazitätsänderungen in der Umgebung der Spitze, so daß Einflüsse aus der Umgebung die Detektion weniger verfälschen.

Es hat sich jedoch herausgestellt, daß die hohe Empfindlichkeit im Bereich der Spitze der Flüssigkeitstransfernadel auch nachteilig sein kann, da jeder Feuchtefilm im Bereich der Spitze als Oberfläche einer kompakten, soliden Flüssigkeit detektiert wird, auch wenn die Nadelspitze die Oberfläche der Flüssigkeit noch gar nicht erreicht hat. Um dies zu vermeiden, können spezielle, aufwendige Fehlerstrategien entwickelt und eingesetzt werden, beispielsweise Nachfahren, mehrfaches Einstechen, Druckmessung oder Plausibilitätskontrollen bei vorhersagbarer Füllstandshöhe.

Ein die Detektion der Flüssigkeitsoberfläche verfälschender Flüssigkeitsfilm kann insbesondere die Bildung von Schaum oder von seifenblasenähnlichen Strukturen sein, die relativ langlebig sind und auch durch Einstechen der Flüssigkeitstransfernadel nicht zwangsläufig zu zerstören sind. Solche Schaumschichten oder seifenblasenähnlichen Strukturen entstehen zum Beispiel beim Schütteln von Vollblutproben, beim Zentrifugieren von Blutproben bei der Serumplasmagewinnung, beim Transport von Reagenz-Rack-Packs und beim Resuspendieren und Aufrühren sogenannter mit Streptavidin beschichteter Beads. Derartige Schaumschichten sind in der Regel 2 bis 5 mm dick. Auch sich am Behälterkragen bildende Blasen lassen sich in vielen Fällen nicht durch die dünne Flüssigkeitstransfernadel zerstechen.

Der Erfindung liegt die Aufgabe zugrunde, die bekannten kapazitiven Flüssigkeitshöhenstandsdetektoren, insbesondere die aus dem Dokument EP 0555710 A2 bekannte triaxiale Anordnung mit aktiv geschirmter Kompensationselektrode und mitgeführter, als Gegenelektrode wirkender Abschirmelektrode derart weiterzubilden, daß fehlerfrei zwischen kompakter solider Flüssigkeit und Schaum- bzw. Flüssigkeitsfilmen unterschieden werden kann.

Die Aufgabe wird bei einer Flüssigkeitstransfereinrichtung der eingangs bezeichneten Art mit einem kapazitiven Flüssigkeitshöhenstandsdetektor dadurch gelöst, daß der Flüssigkeitshöhenstandsdetektor auch einen temperaturabhängigen Detektionswiderstand umfaßt, der im Bereich der Spitze der Flüssigkeitstransfernadel angeordnet und mit dieser in die Analyseflüssigkeit eintauchbar ist. Die Detektionsschaltung umfaßt dabei eine Stromversorgung, mittels der dem Detektionswiderstand Strom zuführbar ist, und sie ist zur Detektion einer Änderung des Widerstands des Detektionswiderstands beim Eintauchen in die Analyseflüssigkeit ausgebildet.

Die der Erfindung zugrundeliegende Idee besteht darin, daß zur Detektion des Eintauchens der Flüssigkeitstransfernadel in die Analyseflüssigkeit auch die Änderung des Widerstands eines temperaturabhängigen Detektionswiderstands, der im Bereich der Spitze der Flüssigkeitstransfernadel angeordnet ist, mit der Flüssigkeitstransfernadel in die Analyseflüssigkeit eingetaucht und von Strom einer Stromversorgung durchflossen wird, gemessen wird. Der Detektionswiderstand kann somit herangezogen werden, um ein von dem kapazitiven Flüssigkeitshöhenstandsdetektor erkanntes Eintauchen in eine Flüssigkeit zu überprüfen und zu verifizieren.

An der Spitze der Flüssigkeitstransfernadel bzw. im Bereich der Spitze befindet sich ein mit einem sehr geringen Strom, vorzugsweise einem Konstantstrom, durchflossener temperaturabhängiger Widerstand, d.h. ein NTC oder ein PTC. Wenn die Spitze der Flüssigkeitstransfernadel bzw. der Detektionswiderstand in Luft ist, erwärmt sich der Detektionswiderstand geringfügig gegenüber der ihn umgebenden Luft. Wenn der Detektionswiderstand in einen Schaum oder eine Blase eintaucht, erfolgt nur eine geringe Wärmeabfuhr durch den Kontakt mit der wenigen, die Blase bildenden Flüssigkeit, so daß sich die Temperatur und somit der Widerstand des Detektionswiderstandes nur wenig oder gar nicht ändern.

Taucht der Detektionswiderstand dagegen in eine kompakte, solide Flüssigkeit ein, wird erheblich mehr Wärme abgeführt, so daß ein merklicher Temperatursprung und somit eine Widerstandsänderung erfolgt, die meßtechnisch erfaßbar ist. Dieses zusätzliche Signal des Detektionswiderstandes kann daher zum Differenzieren zwischen dünnen Flüssigkeitsfilmen und Schaumbläschen einerseits und einer kompakten Flüssigkeit andererseits herangezogen werden, so daß das Eintauchen in die Analyseflüssigkeit eindeutig erkannt werden kann.

Die Erfindung beruht auf dem Effekt, daß sich die Temperatur des Detektionswiderstandes und somit dessen Widerstand beim Eintauchen in die Flüssigkeit signifikant von der Temperatur bzw. dem Widerstand in Luft oder in einem dünnen Flüssigkeitsfilm oder Schaumbläschen unterscheidet. Das Eintauchen in die Flüssigkeit kann daher nicht nur zu einer Temperaturerniedrigung, sondern auch zu einer detektierbaren Temperaturerhöhung, beispielsweise bei Inkubationsrotoren, des Detektionswiderstandes führen.

Es sollte jedoch beachtet werden, daß der Detektionswiderstand so dimensioniert wird und seine Betriebsbedingungen so eingestellt werden, daß eine Erwärmung der damit in Kontakt kommenden Analyseflüssigkeit nicht zu einer störenden Veränderung oder Beeinflussung der Eigenschaften der Analyseflüssigkeit führt. Im Hinblick auf die thermisch empfindlichen Analyseflüssigkeiten ist es vorteilhaft, wenn die Temperatur des Detektionswiderstandes nicht über 37 °c beträgt. Eine besondere Ausbildung kann darin bestehen, daß die Temperatur des Detektionswiderstandes automatisch relativ zur Umgebungstemperatur oder zur Temperatur der Analyseflüssigkeit, insbesondere diese um eine feste Temperaturdifferenz übersteigend oder unterschreitend, geregelt wird. Im allgemeinen wird es ausreichend sicher detektierbar sein, wenn die Temperaturänderung des Detektionswiderstandes beim Eintauchen zwischen 1 K und 10 K, bevorzugt zwischen 3 K und 7 K beträgt.

Prinzipiell wäre ein temperaturabhängiger Detektionswiderstand auch alleine, d.h. ohne Kombination mit einem kapazitiven Flüssigkeitshöhenstandsdetektor, zur Detektion des Eintauchens in die Analyseflüssigkeit geeignet. Ein solcher Aufbau ist jedoch in den meisten Anwendungsfällen zu träge, um den an die Detektionsgeschwindigkeit gestellten Anforderungen zu entsprechen. Durch die erfindungsgemäße Kombination einer schnell reagierenden kapazitiven Flüssigkeitshöhenstandsdetektion mit einer langsameren Nachkontrolle mittels des Detektionswiderstandes werden die Vorteile beider Detektionsmöglichkeiten vereint.

Die erfindungsgemäße zusätzliche Verwendung eines Detektionswiderstandes in Kombination mit einem kapazitiven Flüssigkeitshöhenstandsdetektor ist prinzipiell mit allen kapazitiven Flüssigkeitshöhenstandsdetektoren vorteilhaft, unabhängig davon, ob mit diesen die Kapazität der Flüssigkeitstransfernadel gegen Masse gemessen wird oder die Flüssigkeitstransfernadel Bestandteil einer Koaxialelektrodenanordnung ist. Allgemein ist eine Kontrolle mittels eine Detektionswiderstandes immer dann vorteilhaft, wenn der kapazitive Flüssigkeitshöhenstandsdetektor so ausgebildet ist, daß er sehr empfindlich auf Kapazitätsänderungen in der Umgebung (Proben, Rotor, Reagenzgefäße, statische Aufladungen usw.) reagiert und insbesondere, wenn er sehr empfindlich auf Kapazitätsänderungen in der Umgebung der Spitze der Flüssigkeitstransfernadel reagiert. Hingegen wird der Detektionswiderstand in der Praxis keine besonderen Vorteile bringen, wenn die Masse der detektierten Flüssigkeit selbst in den Signalpfad einbezogen ist, da in diesem Fall die Schaum- oder Bläschenbildung kaum die Detektion der Flüssigkeitsoberfläche beeinträchtigt.

Die Erfindung ist daher bevorzugt bei Koaxialelektrodenanordnungen gemäß dem Dokument EP 0555710 A2, auf das insoweit vollinhaltlich Bezug genommen wird, d.h. bei Koaxialelektrodenanordnungen, die vorteilhafterweise eine aktive Schirmung mittels einer an eine Spannungsfolgerschaltung angeschlossene Kompensationselektrode und/oder eine bis in den Bereich der Spitze der Flüssigkeitstransfernadel geführte Abschirmelektrode als Gegenelektrode aufweisen.

Eine erste bevorzugte zusätzliche Besonderheit kann daher darin bestehen, daß die Flüssigkeitstransfernadel Teil einer Koaxialelektrodenanordnung ist, die außer der Flüssigkeitstransfernadel mindestens eine diese umgebende und von ihr isolierte Koaxialelektrode aufweist. Ein zusätzliches vorteilhaftes Ausbildungsmerkmal besteht darin, daß die Koaxialelektrodenanordnung eine Abschirmelektrode aufweist, die die Signalelektrode umgibt, auf Konstantpotential liegt und als Gegenelektrode wirkt.

Eine andere vorteilhafte Besonderheit kann sein, daß die Detektionsschaltung eine Wechselspannungsquelle und eine Spannungsfolgerschaltung aufweist, und der Eingang und Ausgang der Spannungsfolgerschaltung mit zwei benachbarten Elektroden der Koaxialelektrodenanordnung als Signalelektrode und Kompensationselektrode verbunden sind, so daß zwischen der Signalelektrode und der Kompensationselektrode keine Spannungsdifferenz auftritt und die Kapazität zwischen der Signalelektrode und der Kompensationselektrode kompensiert wird. Dabei kann nach einem weiteren vorteilhaften Merkmal vorgesehen sein, daß eine erste der Elektroden der Koaxialelektrodenanordnung die Signalelektrode des Flüssigkeitshöhenstandsdetektors und mit dem Eingang der Spannungsfolgerschaltung verbunden ist und eine zweite Elektrode der Koaxialelektrodenanordnung, die zu der Signalelektrode benachbart ist, mit dem Ausgang der Spannungsfolgerschaltung verbunden ist.

Vorteilhafterweise ist ferner vorgesehen, daS die Flüssigkeitstransfernadel als Signalelektrode mit dem Eingang der Spannungsfolgerschaltung und die benachbarte Koaxialelektrode als Kompensationselektrode mit dem Ausgang der Spannungsfolgerschaltung verbunden ist.

Die Erfindung wird im folgenden anhand von in den Figuren schematisch dargestellten Ausführungsbeispielen näher erläutert. Es zeigen:
- Fig. 1: Eine Flüssigkeitstransfereinrichtung in perspektivischer Darstellung,
- Fig. 2: eine stark schematisierte Schnittdarstellung einer Koaxialelektrodenanordnung in Verbindung mit einem Prinzipschaltbild der Detektionsschaltung,
- Fig. 3: eine teilweise aufgeschnittene perspektivische Darstellung einer Koaxialelektrodenanordnung,
- Fig. 4: ein Zeitdiagramm zu einem kapazitiven Flüssigkeitshöhenstandsdetektor,
- Fig. 5: ein Zeitdiagramm zu einem Detektionswiderstand,
- Fig. 6: ein Blockschaltbild einer ersten Ausführungsform,
- Fig. 7: ein Blockschaltbild einer zweiten Ausführungsform,
- Fig. 8: ein Prinzipbild einer erfindungsgemäßen Detektionsschaltung,
- Fig. 9: einen Schnitt durch das untere Ende einer Flüssigkeitstransfernadel,
- Fig. 10: eine Abwandlung zu Fig. 9 und
- Fig. 11: eine Abwandlung zu Fig. 8.

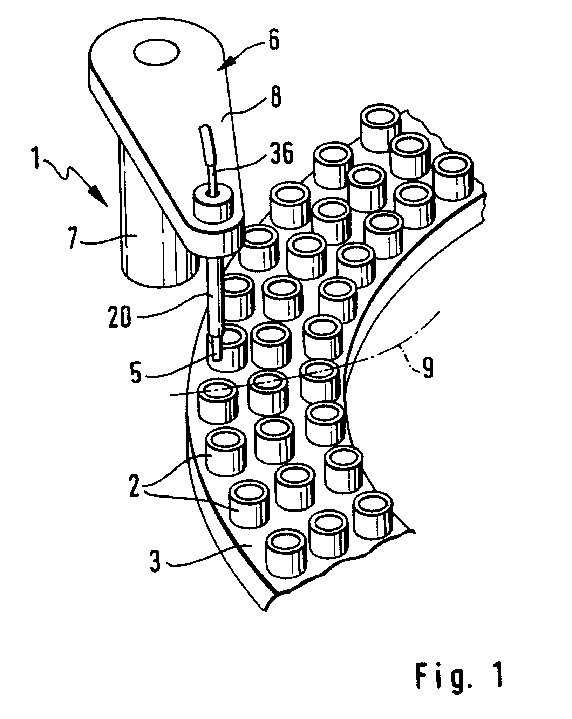

Die in Figur 1 dargestellte Flüssigkeitstransfereinrichtung 1 dient dazu, eine Analyseflilssigkeit aus einem der Gefäße 2 zu entnehmen und in ein anderes Gefäß zu transferieren. Die Gefäße 2 befinden sich auf einem Rotor 3 oder einer anderen beweglichen Gefäßhalterung. In der Praxis weisen automatische Analysegeräte im Regelfall mehrere Gefäßhalterungen auf. Die Gefäßvolumen betragen ca. 400 µl bis 40 ml und die transferierten Flüssigkeitsmengen ca. 10-100 µl, mit einer Auflösung von ca. 0,25 µl. Zur Inkubation bei 37 °c werden die Flüssigkeiten in Mikroküvetten auf einem Inkubationsrotor ausgestoßen; auch dabei muß die Füllstandshöhe ermittelt werden.

Eine Flüssigkeitstransfernadel 5 mit einem Innendurchmesser von ca. 0,4 mm ist an einer Nadelbewegungseinrichtung 6 befestigt, welche eine mittels eines nicht dargestellten Vertikalantriebs aufwärts und abwärts bewegbare Vertikalsäule 7 und einen Schwenkarm 8 aufweist. Dadurch kann die Nadel 5 auf dem Schwenkkreis 9 in verschiedene Positionen gebracht und in eines der Gefäße 2 abgesenkt werden. Derartige Flüssigkeitstransfereinrichtungen sind in verschiedenen Ausführungsformen bekannt. Im Hinblick auf einen geeigneten Antriebsmechanismus sei beispielsweise auf die EP-A-0 408 804 verwiesen.

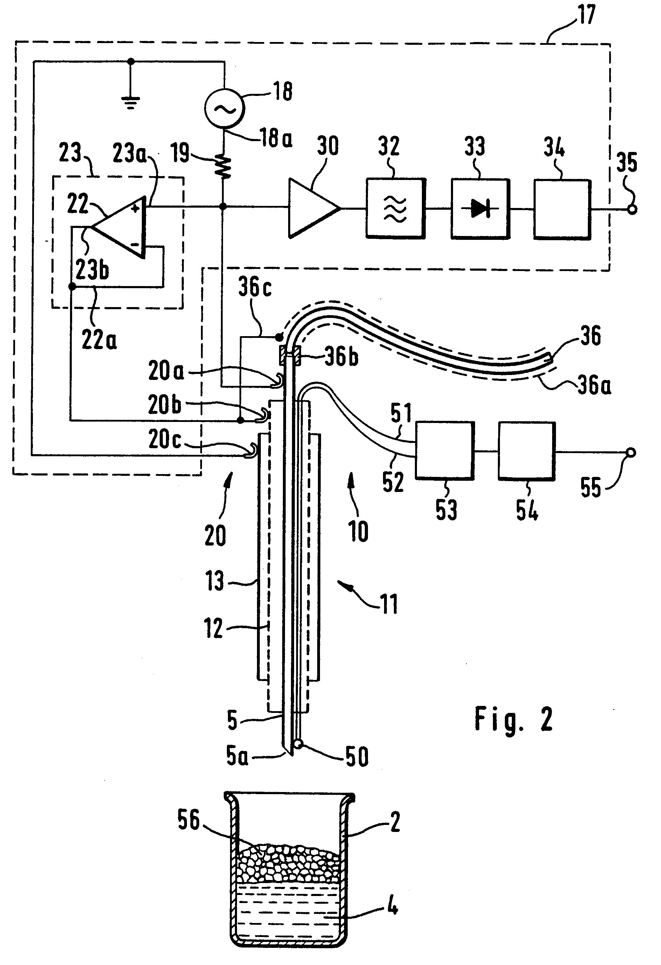

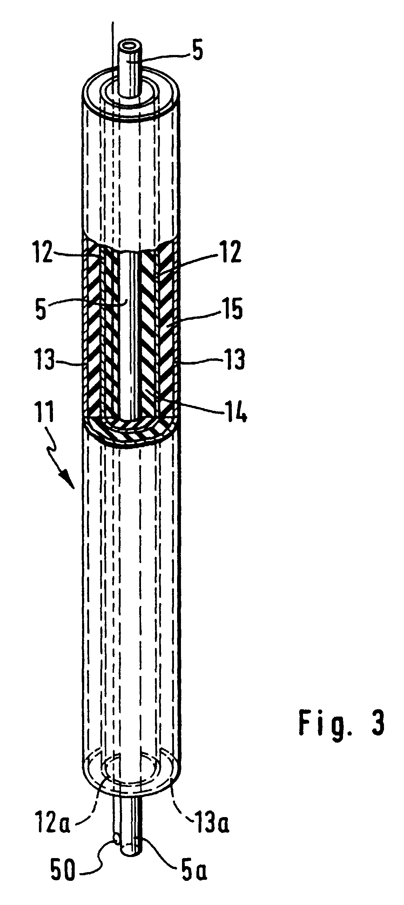

Die Flüssigkeitstransfernadel 5 ist bevorzugt Teil einer Koaxialelektrodenanordnung 11, die in Figur 2 in einer stark schematisierten Querschnittsdarstellung und in Figur 3 perspektivisch dargestellt ist.

Die Flüssigkeitstransfernadel 5 bildet in einer bevorzugten Ausführungsform die innerste Elektrode der Koaxialelektrodenanordnung 11 eines insgesamt mit 10 bezeichneten Flüssigkeitshöhenstandsdetektors. Hinsichtlich Einzelheiten zu der dargestellten Koaxialelektrodenanordnung 11, der elektronischen Schaltung, der Vorteile und möglichen Alternativen und Varianten wird auf das Dokument EP 0555710 A2 Bezug genommen. Die Koaxialelektrodenanordnung 11 umfaßt die Flüssigkeitstransfernadel 5, eine als Kompensationselektrode einer aktiven Schirmung wirkende Koaxialelektrode 12 und eine der Abschirmung dienende Gegenelektrode 13. Der Aufbau der Koaxialelektrodenanordnung 11 ist nochmals in Fig. 3 verdeutlicht (vgl. EP 0555710 A2).

Die Flüssigkeitstransfernadel 5 wird in radialer Richtung auf ihrem gesamten Umfang durch die Kompensationselektrode 12 und die Abschirmelektrode 13 umgeben und ist in ihrer räumlichen Lage relativ zu den Elektroden fixiert. Die Koaxialelektrode 5 ist somit ein festes Teil einer sich in axialer Richtung über die überwiegende Länge der Flüssigkeitstransfernadel 5, mit Ausnahme der Nadelspitze 5a, erstreckenden Koaxialelektrodenanordnung 11, so daS keine Relativbewegung zwischen der Flüssigkeitstransfernadel 5 und den sie umgebenden Elektroden stattfindet. Die Kompensationselektrode 12 wird, wie auch die Abschirmelektrode 13, gemeinsam mit der Flüssigkeitstransfernadel 5 mittels einer Nadelbewegungseinrichtung auf- und abwärts bewegt oder umgekehrt das Gefäß mit der Analyseflüssigkeit in Richtung auf die Flüssigkeitstransfernadel angehoben und abgesenkt.

Aufgrund der aktiven Abschirmung mittels der Kompensationselektrode 12 ist bei dieser Relativbewegung zwischen Flüssigkeitstransfernadel 5 und der Analyseflüssigkeit die als Signalelektrode dienende Flüssigkeitstransfernadel 5 weitgehend abgeschirmt, so daS nicht die gesamte Nadellänge kapazitiv an sämtliche leitfähige Teile in ihrer Umgebung koppelt, sondern im wesentlichen die ungeschirmte, am unteren Ende auf einem kurzen Stück herausragende Nadelspitze 5a. Es wird also nur dort die Kapazität bzw. eine Änderung der Kapazität detektiert, wo es für die kapazitive Flüssigkeitshöhenstandsdetektion zweckmäßig ist.

Die kapazitive Detektionsschaltung 17 umfaßt eine Wechselspannungsquelle 18 mit einem heißen Pol 18a und einem Arbeitswiderstand 19. Der Koaxialkontakt 20 zu der Koaxialelektrodenanordnung 11 umfaßt den Anschluß zu dem innersten Leiter 20a, zum ersten Schirm 20b und zum zweiten Schirm 20c. Das Signal der Flüssigkeitstransfernadel 5 wird dem nichtinvertierenden Eingang 23a der Spannungsfolgerschaltung 23 zugeführt. Der Ausgang 23b ist über die Leitung 22a auf den invertierenden Eingang zurückgekoppelt und wird ebenfalls zur aktiven Schirmung an die Kompensationselektrode 12 angelegt. Die Detektionsschaltung 17 umfaßt ferner einen Verstärker 30, einen Filter 32, einen Spitzenwertgleichrichter 33 und eine Auswerteeinheit 34 mit dem Ausgang 35.

Der Schlauch 36 mit der Abschirmung 36a ist über einen Schlauchanschluß 36b an die Flüssigkeitstransfernadel 5 angeschlossen, wobei die Abschirmung 36a mittels der Verbindungsleitung 36c mit dem Ausgang 23b der Spannungsfolgerschaltung 23 und der Kompensationselektrode 12 verbunden ist.

Erfindungsgemäß weist die Koaxialelektrodenanordnung 11 im Bereich der Spitze 5a der Flüssigkeitstransfernadel 5 einen temperaturabhängigen Detektionswiderstand 50 auf, der über zwei Leitungen 51,52 mit einer Stromversorgung 53 verbunden ist, die wiederum mit einer Auswerteschaltung 54 in Verbindung steht. Am Ausgang 55 der Auswerteschaltung 54 liegt ein analoges oder digitales Signal an, das anzeigt, ob der Detektionswiderstand 50 in Analyseflüssigkeit 4 eingetaucht ist oder sich in Luft bzw. in Schaum 56 über der Analyseflüssigkeit 4 befindet.

Der Detektionswiderstand 50 ist in Zweipoltechnik an die Stromversorgung 53 und die Auswerteschaltung 54 angeschlossen, da bei der Messung des Widerstands des Detektionswiderstandes 50 keine hohen Genauigkeitsanforderungen zu erfüllen sind; in besonderen Anwendungsfällen kann auch eine Vierpolmessung in Betracht kommen. Der Detektionswiderstand 50 kann mit Gleich- oder Wechselstrom gespeist werden; bei Versorgung mittels einer wechselspannung ist deren Frequenz vorzugsweise von derjenigen der kapazitiven Flüssigkeitshöhenstandsmessung verschieden. Vorzugsweise wird eine der Elektroden 5, 12, 13 der Koaxialelektrodenanordnung 11, insbesondere die Flüssigkeitstransfernadel 5, als eine Zuleitung zu dem Detektionswiderstand 50 benutzt, um auf diese Weise Leitungen und damit verbundene Kapazitätsstörungen einzusparen. Die Signale der kapazitiven Flüssigkeitshöhenstandsdetektion und der Messung des Widerstands des Detektionswiderstands 50 können dabei durch geeignete Modulations- oder Filter-verfahren getrennt werden.

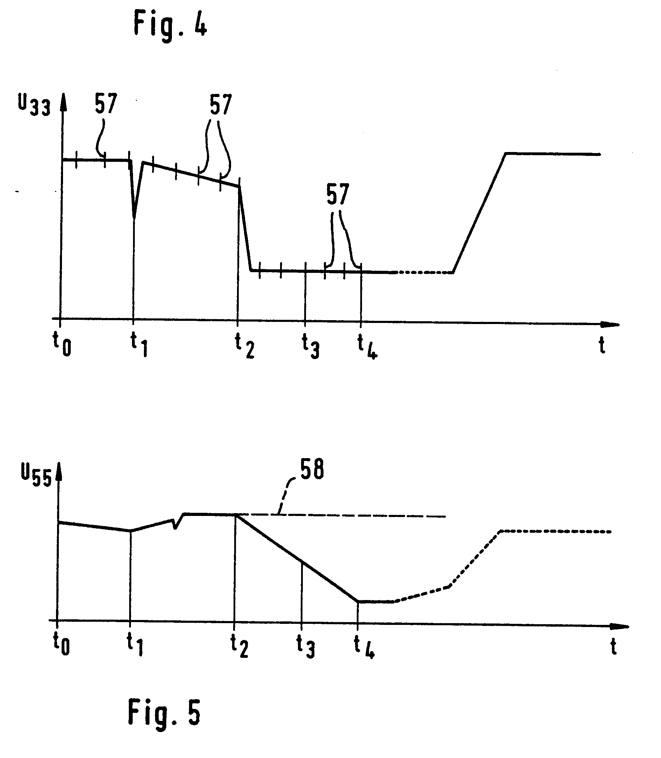

Die Fig. 4 zeigt in einem Zeitdiagramm die Spannung U₃₃ am Ausgang des Integrators 33 beim Absenken der Flüssigkeitstransfernadel 5 in Richtung auf die Analyseflüssigkeit 4. Die Spitze 5a befindet sich zum Zeitpunkt t=0 in einem Abstand von der Oberfläche der Analyseflüssigkeit 4. Die Absenkbewegung wird inkrementell durchgeführt, wobei die Verfahrgeschwindigkeit der Nadel ca. 1000 Schritte pro Sekunde mit einer Schrittweite von jeweils 0,2 mm beträgt. Dabei wird in regelmäßigen Zeitintervallen von 1 msec abgefragt, ob sich die Spannung U₃₃ mit einer bestimmten Geschwindigkeit geändert hat. Die Abtastzeitpunkte 57 sind durch die senkrechten Striche angedeutet.

Zum Zeitpunkt t₁ findet eine Störung statt, die ein schnelles, kurzfristiges Absenken des Signals zur Folge hat. Eine solche Störung kann beispielsweise durch eine elektrostatische Störung oder eine platzende Blase verursacht sein. Die Absenkbewegung der Flüssigkeitstransfernadel 5 wird durch das kurzfristige und schnelle Absinken des Signals jedoch noch nicht gestoppt, sondern im Anschluß an dieses Ereignis wird mehrfach, beispielsweise dreimal, abgefragt, ob ein bestimmter Wert relativ zu dem letzten gemessenen Bezugswert vor dieser Störung unterschritten bleibt. Wenn dies nicht der Fall ist, beispielsweise weil die Blase inzwischen geplatzt ist und die Spitze 5a sich daher inzwischen wieder in Luft befindet, wird die Abwärtsbewegung weiter fortgesetzt, da erkannt wurde, daS die Spitze 5a noch nicht in die Analyseflüssigkeit 4 eingetaucht ist.

Zum Zeitpunkt t₂ fällt das Signal wieder schnell ab und bleibt im Anschluß daran auch während der mehrfachen weiteren Abtastungen 57 auf dem niedrigen Wert. Dies bedeutet, daß die Spitze 5a entweder in die Analyseflüssigkeit 4 eingetaucht ist oder, daß sie sich in einer Blase oder einem Schaum über der Analyseflüssigkeit 4 befindet, die sich durch das Einstechen nicht zurückgebildet haben. Anhand des Signals des kapazitiven Flüssigkeitshöhenstandsdetektors 10 allein kann diese Unterscheidung, die innerhalb kürzester Zeit getroffen werden muß, um ein zu tiefes Eintauchen der Flüssigkeitstransfernadel 5 in die Analyseflüssigkeit 4 zu verhindern, nicht getroffen werden. Auch wenn beispielsweise nach drei bis vier weiteren Abfrageintervallen die Absenkbewegung gestoppt wird und die möglichen Auswertebedingungen erfüllt sind, d.h. eine Erkennung eines steilen Ahsinkens des Signals durch Differenzieren des Signals und Triggerung auf einen bestimmten Schwellenwert, der Vergleich mit einem Bezugswert vor dem Triggerereignis und die Integration mehrerer Abtastungen zur Störunterdrückung, kann nicht entschieden werden, ob die Spitze 5a wirklich in kompakte Flüssigkeit eingetaucht ist oder nicht.

Zur Lösung dieses Problems wird die Spannung U₅₅ am Ausgang 55 der Auswerteschaltung 54 zu dem Detektionswiderstand 50 herangezogen, die ein Maß für den Widerstand des Detektionswiderstands 50 ist und deren paralleler zeitlicher Verlauf in Fig. 5 dargestellt ist. Bei der Störung zum Zeitpunkt t₁ reagiert der Detektionswiderstand 50 nicht, da er zu träge ist.

Die Ansprechzeit der kapazitiven Flüssigkeitshöhenstandsdetektion liegt bei 1 msec oder darunter, wogegen die Ansprechzeit der thermischen Messung mittels der temperaturabhängigen Detektionswiderstands 50 bei ca. 10 bis 100 msec liegt. Durch eine erfindungsgemäße Kombination einer schnellen kapazitiven Messung zur Detektion von Veränderungen sowie einer nachfolgenden Plausibilitätsprüfung mittels einer langsameren, thermischen Messung wird ein Optimum zwischen Reaktionszeit, d.h. minimaler Verschleppung, und Störunterdrückung, d.h. sicherer Erkennung von Artifakten, erzielt.

Aus Fig. 5 ist ersichtlich, daß zum Zeitpunkt t₂ die Spannung U₅₅, die ein Maß für die Temperatur des Detektionswiderstandes 50 ist, abfällt. Dies ist nur der Fall, wenn der Detektionswiderstand 50 tatsächlich in die Analyseflüssigkeit 4 eingetaucht ist. Bei einer Störung, beispielsweise einer nicht zerplatzenden Blase, würde das Signal den gestrichelt dargestellten alternativen Verlauf 58 annehmen. Durch die Messung des Widerstands des Detektionswiderstands 50 zum Zeitpunkt t₄ kann daher unterschieden werden, ob die Flüssigkeitstransfernadel 5, deren Abwärtsbewegung beispielsweise zum Zeitpunkt t₃ gestoppt wurde, in die Analyseflüssigkeit 4 eingetaucht ist oder nicht, so daß mit dem Flüssigkeitstransfer begonnen oder eine neue Absenkbewegung eingeleitet werden kann.

Eine Variante hierzu, die besonders für zeitkritische Anwendungsfälle interessant ist, bei denen es auf eine sehr schnelle Messung ankommt und in denen die Zeit für die Nachkontrolle mittels eines temperaturabhängigen Detektionswiderstands 50 vor dem Flüssigkeitstransfer nicht zur Verfügung steht, besteht darin, daß der Flüssigkeitstransfer bereits nach dem Stoppen der Eintauchbewegung, d.h. zum Zeitpunkt t₃, zu dem die kapazitiven Nachkontrollen abgeschlossen sind, durchgeführt wird und während des Flüssigkeitstransfers die Messung mit dem Detektionswiderstand 50 durchgeführt wird. Falls die Widerstandsmessung ergibt, daß die Flüssigkeitstransfernadel 5 zum Zeitpunkt t₃ noch nicht in die Analyseflüssigkeit eingetaucht war, wird dies dem Analysesystem signalisiert und das Meßergebnis der jeweiligen Probe im Nachhinein verworfen. Auf diese Weise kann eine höhere Durchsatzrate erzielt werden.

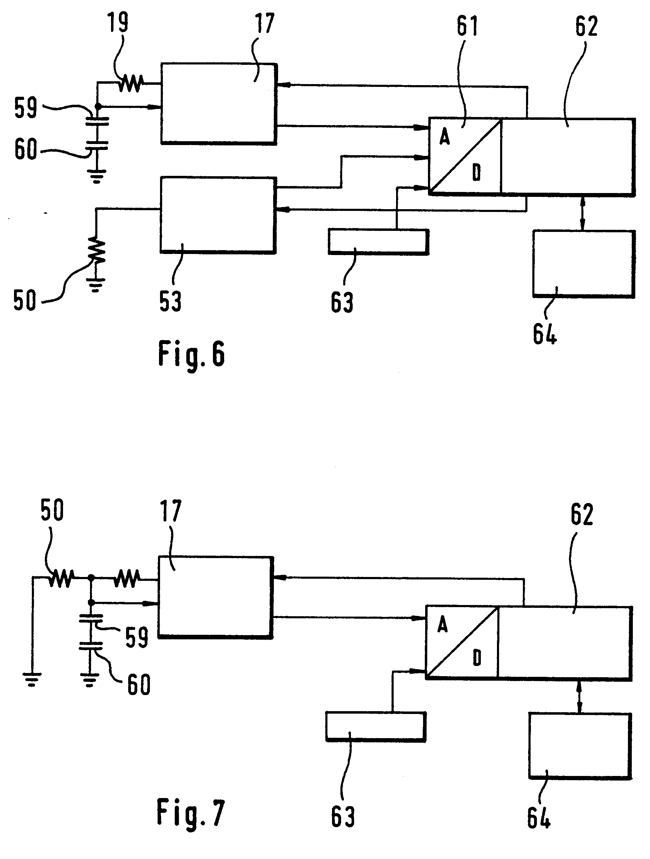

In Fig. 6 ist ein Blockschaltbild einer ersten Ausführungsform dargestellt. Die Detektionsschaltung 17 umfaßt eine Wechselspannungsquelle, einen Impedanzwandler, einen Filter und einen Spitzenwertgleichrichter und wertet über einen Arbeitswiderstand 19 das Signal des Flüssigkeitshöhenstandsdetektors aus. Dargestellt sind die Signalkapazitäten 59 zwischen der Abschirmelektrode 13 und der Analyseflüssigkeit 4 sowie die Kapazität 60 zwischen der Flüssigkeit 4 und der Flüssigkeitstransfernadel 5. Der Detektionswiderstand 50 wird über eine Stromversorgung 53 mit Strom versorgt. Ein Analog-zu-Digital-Wandler 61 liest die Daten aus, und ein Prozessor 62 steuert den Meßablauf.

Der Detektionswiderstand 50 wird mit einem kleinen Konstantstrom gegenüber der Umgebungstemperatur, die mittels der Temperaturmeßeinheit 63 gemessen wird, aufgeheizt. Durch eine Messung der Umgebungstemperatur oder alternativ der Temperatur von Analyseflüssigkeit 4 kann die Flüssigkeitstransfereinrichtung optimal zu den vorliegenden Betriebsbedingungen gesteuert werden. Die Temperierung des Detektionswiderstandes 50 soll keinen Einfluß auf chemische oder biologische Prozesse in der Analyseflüssigkeit 4 haben. Eine Aufheizung um zwischen 1 K und 10 K, bevorzugt zwischen 3 K und 7 K ist in der Regel ausreichend. Bei inkubierter Flüssigkeit von 37 °c kann die Vorwärmtemperatur des Detektionswiderstandes 50 an Luft vorteilhafterweise zwischen Raumtemperatur und der Inkubationstemperatur liegen.

An den Prozessor 62 ist ein Lernspeicher 64 angeschlossen, in dem typische Ändervngsverhalten des Detektionswiderstandes 50 für das Eintauchen in Schaum, Blasen, Flüssigkeit oder sein Verhalten bei Luftzug etc. durch adaptive, lernfähige Softwarestrukturen im Kontrollsystem bauartentypisch oder von Gerät zu Gerät individuell ermittelt abgespeichert werden.

Die Anordnung des Detektionswiderstands 50 soll kapazitätsarm sein, um den kapazitiven Flüssigkeitshöhenstandsdetektor 10 nicht durch parasitäre Kapazitäten zu stören. Daher wird in einer vorteilhaften Ausbildung vorgeschlagen, daß der Detektionswiderstand 50 oder mindestens eine Zuleitung zwischen einer Abschirmelektrode 13 und einer Kompensationselektrode 12 angeordnet ist. Dabei ist die kapazitive Beeinflussung am geringsten, weil die Kapazität zwischen Abschirmelektrode 13 und Kompensationselektrode 12 durch die Spannungsfolgerschaltung 23 kompensiert wird.

In Fig. 7 ist eine andere Ausführungsform dargestellt, in der der Detektionswiderstand 50 zwischen der Signalelektrode 5 und einer Abschirmelektrode 13 angeschlossen ist. Er wird dabei von der Wechselspannungsquelle 18 bestromt, so daß dem kapazitiven, zu detektierenden Signal eine kapazitive Grundlast parallel geschaltet ist. Dies kann dann zweckmäßig sein, wenn die Kapazität des Detektionswiderstandes 50 mit seinen Anschlüssen nicht wesentlich über der Signalkapazität liegt. Das Ausgangssignal des Integrators 33 ist dann ein überlagertes Signal aus einem kapazitiven Anteil des kapazitiven Flüssigkeitshöhenstandsdetektors 10 und einem thermischen Anteil aus dem temperaturabhängigen Detektionswiderstand 50, wobei die jeweiligen Signalanteile durch den Prozessor 62 ermittelt werden. Vorteil hierbei ist, daS man keine separaten Zuleitungen zu dem Detektionswiderstand 50 benötigt, da die Elektroden, beispielsweise die Flüssigkeitstransfernadel 5, die Abschirmelektrode 13 oder die Koaxialelektrode 12 als Zuleitung genutzt werden kann. Nachteilig dabei ist die zusätzliche kapazitive Grundlast zu dem kapazitiven Signalweg und die hohe Wechselstromleistung, die die Wechselspannungsquelle 18 zur Verfügung stellen muß.

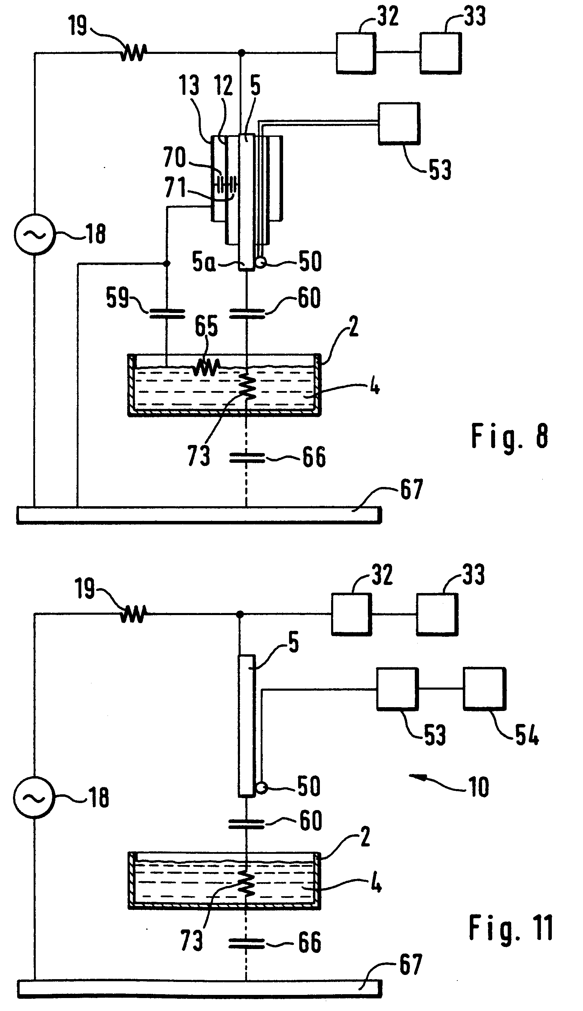

In Fig. 8 sind die vereinfachten kapazitiven Verhältnisse veranschaulicht. Zwischen den beiden Kapazitäten 59 und 60 liegt noch der Oberflächenwiderstand 65 der Analyseflüssigkeit 4. Die gestrichelt dargestellte Kapazität 66 der Analyseflüssigkeit 4 gegenüber dem Bezugspotential 67 kann bei der triaxialen Anordnung vernachlässigt werden. Mit 73 ist der Volumenwiderstand der Analyseflüssigkeit 4 bezeichnet. Die im Vergleich zu den Kapazitäten 59 und 60 relativ großen Kapazitäten 70, 71 werden für die Anordnung durch das identische Potential an der Flüssigkeitstransfernadel 5 und der Koaxialelektrode 12 eliminiert. An diesem Bild wird deutlich, daS die triaxiale Anordnung besonders empfindlich auf Kapazitätsänderungen im Bereich der Spitze 5a der Flüssigkeitstransfernadel 5 reagiert, an der der Detektionswiderstand 50 zur Kontrolle angeordnet ist.

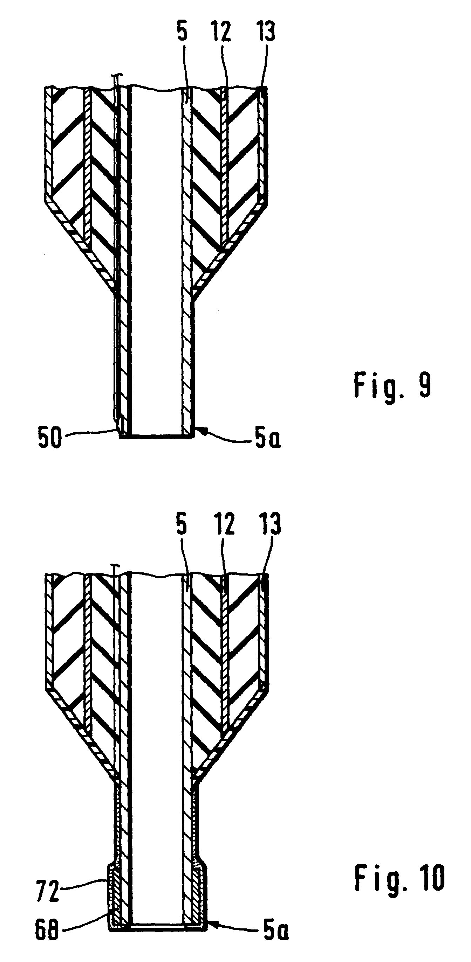

Die Figur 9 zeigt einen Schnitt durch das untere Ende einer Flüssigkeitstransfernadel 5 mit einem Detektionswiderstand 50. Der Detektionswiderstand 50 sollte glatt sein, keine Angriffsfläche bieten und zweckmäßig mechanisch befestigt und elektronisch angeschlossen sein. Eventuell kann er mit einer flüssigkeitsabstoßenden Nanobeschichtung versehen sein. In Betracht kommen beispielsweise NTC- oder PTC-Widerstandspillen, von denen 0,1 bis 0,2 mm große Strukturen erhältlich sind, die in eine Vertiefung oder Öffnung im Bereich der Nadelspitze 5a eingelassen werden können. Der Detektionswiderstand 50 kann mit einem chemisch resistenten Vergußmittel eingegossen sein.

In Fig. 10 ist eine alternative Ausbildung mit einem Widerstandsfilm oder einer Widerstandsfolie 68, die gegen die jeweiligen Flüssigkeiten resistent ist und um die Innen- oder Außenseite der Flüssigkeitstransfernadel 5 gewickelt sein kann, dargestellt. Die Widerstandsfolie 68 ist mit einer Schutzbeschichtung 72 versehen.

Die Figur 11 zeigt in einer Abwandlung zu Fig. 8 eine schematische Darstellung eines konventionellen, kapazitiven Flüssigkeitshöhenstandsdetektors 10, der erfindungsgemäß mit einem zusätzlichen Detektionswiderstand 50 ausgerüstet ist. Bei dieser Messung ist der Volumenwiderstand 73 der Analyseflüssigkeit 4 in den Signalpfad einbezogen. Bei dieser Anordnung ist die Messung daher selektiver gegen Schaum- und Blasenbildung, aber empfindlicher gegen parasitäre Einflüsse und Einflüsse von Abstandsvariationen.

### Bezugszeichenliste

- 1: Flüssigkeitstransfereinrichtung
- 2: Gefäß
- 3: Rotor
- 4: Analyseflüssigkeit
- 5: Flüssigkeitstransfernadel
- 5a: Spitze
- 6: Nadelbewegungseinrichtung
- 7: Vertikalsäule
- 8: Schwenkarm
- 9: Schwenkkreis
- 10: Flüssigkeitshöhenstandsdetektor
- 11: Koaxialelektrodenanordnung
- 12: Koaxialelektrode (Kompensationselektrode, aktive Schirmung)
- 12a: Ende
- 13: Abschirmelektrode (Gegenelektrode)
- 13a: Ende
- 14: Dielektrikum
- 15: Dielektrikum
- 17: Kapazitive Detektionsschaltung
- 18: Wechselspannungsguelle
- 18a: heißer Pol
- 19: Arbeitswiderstand
- 20: Koaxialkontakt
- 20a: innerster Leiter
- 20b: erster Schirm
- 20c: zweiter Schirm
- 22: Operationsverstärker
- 22a: Leitung
- 23: Spannungsfolgerschaltung
- 23a: Eingang
- 23b: Ausgang
- 30: Verstärker
- 32: Filter
- 33: Spitzenwertgleichrichter
- 34: Auswerteeinheit
- 35: Ausgang
- 36: Schlauch
- 36a: Abschirmung
- 36b: Schlauchanschluß
- 36c: Verbindungsleitung
- 36a: Abschirmung
- 50: Detektionswiderstand
- 51: Leitung
- 52: Leitung
- 53: Stromversorgung
- 54: Auswerteschaltung
- 55: Ausgang
- 56: Schaum
- 57: Abtastzeitpunkte
- 58: alternativer Verlauf
- 59: Kapazität 4-13
- 60: Kapazität 4-5
- 61: A/D-Wandler
- 62: Prozessor
- 63: Temperaturmeßeinheit
- 64: Lernspeicher
- 65: Oberflächenwiderstand zu 4
- 66: Kapazität 4-67
- 67: Bezugspotential
- 68: Widerstandsfolie
- 70: Kapazität 12-13
- 71: Kapazität 5-12
- 72: Schutzbeschichtung
- 73: Volumenwiderstand zu 4
- U: Spannung
- t: Zeit

## Patentansprüche

1. Flüssigkeitstransfereinrichtung für ein Analysegerät mit einer Flüssigkeitstransfernadel (5) und einem kapazitiven Flüssigkeitshöhenstandsdetektor (10) zur Detektion des Eintauchens der Flüssigkeitstransfernadel (5) in eine in einem Gefäß (2) befindliche Analyseflüssigkeit (4), wobei der Flüssigkeitshöhenstandsdetektor (10) eine Signalelektrode, eine Gegenelektrode und eine Detektionsschaltung (17) zur Detektion einer Änderung der Kapazität zwischen der Signalelektrode und der Gegenelektrode umfaßt,
**dadurch gekennzeichnet,** daß
der Flüssigkeitshöhenstandsdetektor (10) auch einen temperaturabhängigen Detektionswiderstand (50) umfaßt, der im Bereich der Spitze (5a) der Flüssigkeitstransfernadel (5) angeordnet und mit dieser in die Analyseflüssigkeit (4) eintauchbar ist,
die Detektionsschaltung (17) eine Stromversorgung (53) umfaßt, mittels der dem Detektionswiderstand (50) Strom zuführbar ist, und
die Detektionsschaltung (17) zur Detektion einer Änderung des Widerstands des Detektionswiderstands (50) beim Eintauchen in die Analyseflüssigkeit (4) ausgebildet ist.

2. Flüssigkeitstransfereinrichtung nach Anspruch 1, **dadurch gekennzeichnet,** daß die Flüssigkeitstransfernadel (5) Teil einer Koaxialelektrodenanordnung (11) ist, die außer der Flüssigkeitstransfernadel (5) mindestens eine diese umgebende und von ihr isolierte Koaxialelektrode (12) aufweist.

3. Flüssigkeitstransfereinrichtung nach Anspruch 2, **dadurch gekennzeichnet,** daß die Koaxialelektrodenanordnung (11) eine Abschirmelektrode (13) aufweist, die die Signalelektrode umgibt, auf Konstantpotential liegt und als Gegenelektrode wirkt.

4. Flüssigkeitstransfereinrichtung nach Anspruch 2 oder 3, **dadurch gekennzeichnet,** daß die Detektionsschaltung (17) eine Wechselspannungsquelle (18) und eine Spannungsfolgerschaltung (23) aufweist und der Eingang (23a) und Ausgang (23b) der Spannungsfolgerschaltung (23) mit zwei benachbarten Elektroden (5, 12) der Koaxialelektrodenanordnung (11) als Signalelektrode und Kompensationselektrode verbunden sind, so daS zwischen der Signalelektrode und der Kompensationselektrode keine Spannungsdifferenz auftritt.

5. Flüssigkeitstransfereinrichtung nach Anspruch 4, **dadurch gekennzeichnet,** daß eine erste der Elektroden (5) der Koaxialelektrodenanordnung (11) die Signalelektrode des Flüssigkeitshöhenstandsdetektors (10) und mit dem Eingang (23a) der Spannungsfolgerschaltung (23) verbunden ist und eine zweite Elektrode (12) der Koaxialelektrodenanordnung (11), die zu der Signalelektrode (5) benachbart ist, mit dem Ausgang (23b) der Spannungsfolgerschaltung (23) verbunden ist.

6. Flüssigkeitstransfereinrichtung nach Anspruch 4 oder 5, **dadurch gekennzeichnet,** daß die Flüssigkeitstransfernadel (5) als Signalelektrode mit dem Eingang (23a) der Spannungsfolgerschaltung (23) und die benachbarte Koaxialelektrode (12) als Kompensationselektrode mit dem Ausgang (23b) der Spannungsfolgerschaltung (23) verbunden ist.

7. Flüssigkeitstransfereinrichtung nach einem der vorhergehenden Ansprüche, **dadurch gekennzeichnet,** daß der Detektionswiderstand (50) als Widerstandsfilm oder -folie (68) ausgebildet ist.

8. Flüssigkeitstransfereinrichtung nach den Ansprüchen 3 und 4, **dadurch gekennzeichnet,** daß der Detektionswiderstand (50) oder mindestens eine Zuleitung (51,52) zwischen einer Abschirmelektrode (13) und einer Kompensationselektrode (12) angeordnet ist.

9. Flüssigkeitstransfereinrichtung nach Anspruch 3, **dadurch gekennzeichnet,** daß der Detektionswiderstand (50) zwischen der Signalelektrode (5) und einer Abschirmelektrode (13) angeschlossen ist.

10. Verfahren zur Detektion des Eintauchens einer Flüssigkeitstransfernadel (5) einer Flüssigkeitstransfereinrichtung eines Analysegerätes in eine in einem Gefäß (2) befindliche Analyseflüssigkeit (4) mittels eines kapazitiven Flüssigkeitshöhenstandsdetektors (10), der eine Signalelektrode, eine Gegenelektrode und eine Detektionsschaltung (17) zur Detektion einer Änderung der Kapazität zwischen der Signalelektrode und der Gegenelektrode umfaßt,
**dadurch gekennzeichnet,** daß
zur Detektion des Eintauchens der Flüssigkeitstransfernadel (5) in die Analyseflüssigkeit (4) auch die Änderung des Widerstands eines temperaturabhängigen Detektionswiderstands (50), der im Bereich der Spitze (5a) der Flüssigkeitstransfernadel (10) angeordnet ist, mit der Flüssigkeitstransfernadel (10) in die Analyseflüssigkeit (4) eingetaucht und von Strom einer Stromversorgung (53) durchflossen wird, gemessen wird.

11. Verfahren nach Anspruch 10, **dadurch gekennzeichnet,** daß die Temperatur der Umgebung oder der Analyseflüssigkeit (4) gemessen und mittels des Stromes durch den Detektionswiderstand (50) die Temperatur des Detektionswiderstands (50) an Luft relativ zu der Temperatur der Umgebung bzw. der Analyseflüssigkeit (4) und diese um eine vorbestimmte Temperaturdifferenz über- oder unterschreitend geregelt wird.

12. Verfahren nach Anspruch 11**, dadurch gekennzeichnet,** daS die Temperaturdifferenz zwischen 1 K und 10 K, bevorzugt zwischen 3 K und 7 K beträgt.

13. Verfahren nach einem der Ansprüche 10 bis 12, **dadurch gekennzeichnet,** daß die Eintauchbewegung der Flüssigkeitstransfernadel (5) in die Analyseflüssigkeit (4) in inkrementellen Absenkschritten durchgeführt wird, bei der ersten Detektion einer Flüssigkeitsoberfläche mittels des kapazitiven Flüssigkeitshöhenstandsdetektors (10) die Eintauchbewegung fortgesetzt und erst nach einer während der fortgesetzten Eintauchbewegung durchgeführten, mehrfachen, aufeinanderfolgenden Detektion von Flüssigkeit mittels des kapazitiven Flüssigkeitshöhenstandsdetektors (10) die Eintauchbewegung gestoppt wird.

14. Verfahren nach Anspruch 13, **dadurch gekennzeichnet,** daß die Änderung des temperaturabhängigen Widerstands (50) nach dem Stoppen der Eintauchbewegung gemessen sowie bei positiver Detektion von kompakter Flüssigkeit mittels des Detektionswiderstands (50) der Flüssigkeitstransfer durchgeführt oder bei negativer Detektion von kompakter Flüssigkeit mittels des Detektionswiderstands (50) die Eintauchbewegung neu gestartet wird.

15. Verfahren nach Anspruch 13, **dadurch gekennzeichnet,** daß der Flüssigkeitstransfer nach dem Stoppen der Eintauchbewegung durchgeführt sowie während des Flüssigkeitstransfers das Eintauchen der Flüssigkeitstransfernadel (4) in die Analyseflüssigkeit mittels einer Messung des Widerstands des Detektionswiderstands (50) überprüft wird.
